# EUROPEAN PATENT APPLICATION

(11) **EP 3 006 489 A1**
(43) Date of publication of application: **13.04.2016**
(21) Application number: 15188650.4
(22) Date of filing: 06.10.2015
(51) Int. Cl.: C08J 5/04, C08J 5/24, D03D 15/00

(54) **Composite fabric made from interwoven carbon filaments and ultra-high molecular weight filaments impregnated in an epoxy resin**

(30) Priority: 08.10.2014 IT GE20140100
(71) Applicant: O M P Racing S.p.A., 16019 Ronco Scrivia (GE) (IT)
(72) Inventor: Delprato, Piero Paolo, 16136 GENOVA (IT)
(74) Representative: Porsia, Attilio

(57) **Abstract**

A composite tissue for the manufacture in mold of low specific weight objects having a high resistance to impacts composed by a tissue of carbon filaments weaved with the filaments of a high-performance polyethylene fiber formed by a linear polyethylene with ultra-high molar mass (UHPE) and impregnated in a matrix of a low curing temperature epoxy resin during the laying of the tissue sheets in the mold, characterized by the fact that the said tissue comprises the use of carbon fiber alternate to the polyethylene (UHPE) fiber in one of the weaving directions (weft or warp) and the use of the sole polyethylene (UHPE) fiber in the direction at right angles.

## Description

The present invention has for its object a composite tissue or fabric made from a tissue of carbon filaments woven together with filaments of linear polyethylene of ultra-high molecular weight (hereafter referred to as UHPE), impregnated in a matrix of low curing temperature epoxy resin during the laying off of the tissue sheets in a curing mold, suitable for the manufacture of components or parts with high resistance to impact, good stiffness, good esthetics, and sufficient ease for manufacturing purposes along with extreme lightness, that make this material particularly well-suited for applications in which weight and/or resistance to impact are fundamental in combination with good esthetic quality, like wheel rims for cars and motorcycles, bumpers for luxury sports cars, seats in carbon for automobiles, interiors for racecars or luxury cars in general, frames for cycles and motorcycles, exoskeletons, prostheses, support systems for mobility for disabled persons (wheelchairs, crutches), racing bicycles, components for watercraft, interiors for boats and the like. In particular, materials of this type are particularly well-suited for use in the fields of automobiles and boats, where lightness and strength are always considered along with good resistance to collision, especially in interiors that are in sight, where the capacity to absorb energy upon impact is an indispensable requirement.

Carbon fibers, as is well known, have great resistance to impact, which is why the use of these fibers is proposed for manufacture of parts subject to collision. Nevertheless, use of carbon fibers in car interiors has been limited up to now by the conformity and safety restrictions imposed on all interiors that might have contact with the head in case of an accident, so as not to create sharp or cutting edges or dangerous fragments in case of collision.

Use of a superficial layer of high performing UHPE polyethylene resin fibers, for example the one known in commerce by the registered name of Dyneema SK 75® of DSM IP ASSETS B.V., would allow to resolve this problem, but unfortunately, fabrics in 100% Dyneema® have an appearance that esthetically is not particularly pleasing, both because of the color (a milky white that changes color to dirty white when placed on one or more layers of carbon), and because it tends to show a distressed quality (due to the much greater slipperiness of Dyneema® fibers with respect to carbon fibers).

The thought was to resolve this problem by inserting the Dyneema® fibers product in a matrix of epoxy resin.

However, the Dyneema® fiber does not get evenly saturated with the epoxy resin and thus the risk is that the entire fabric is not perfectly covered by resin and/or that the resin accumulates or builds up on certain points, both of which are defects that in addition to being completely inacceptable for esthetic components, also cause alterations in the structural performance.

Thus, the scope of the present invention is to provide a composite tissue that brings together the advantages both of carbon fibers and of the high performing polyethylene resin fibers formed by a linear polyethylene of ultra-high molar mass (UHPE) like the Dyneema® fibers and that at the same time may be soaked and saturated well by epoxy resins.

From US 4,983,433 a fiber-reinforced material formed by laminating a resin layer reinforced with a cloth formed by interweaving two kinds of fiber filaments and having a specified structure with a resin layer reinforced with an inorganic fiber layer is known. One of the fiber filaments is made of ultra-high molecular weight polyethylene and the other filament is a carbon fiber filament in the weft.

However also this material was unable to be evenly saturated with the epoxy resin and thus the risk that the resulting entire fabric is not perfectly covered by resin and/or that the resin accumulates or builds up on certain points was present.

It has been discovered that the disadvantages of the known prior art composite tissues of the above mentioned kind can be avoided and that the object of the invention can be achieved by weaving together a yarn of carbon with a yarn of high performance UHPE polyethylene of the type described for example in patent EP 1 699 954 B1 in one of the weaving directions (Weft or warp) and the use of the sole polyethylene fiber in the direction at right angles.

The fabric that is produced in this manner in fact displays an adequate ability to be saturated with regard to epoxy resins.

According to a preferred embodiment of the present invention, what is planned for said fabric is the use of the Dyneema® fiber in one of the two directions of weaving (weft or warp) and the use of the carbon fiber alternate to the Dyneema® fiber in the orthogonal direction. This form of production will speed up the setting up of the looms and facilitate the weaving. To obtain products that are transversally isotropic in the plane, in any case, it is necessary to place a greater number of strata of the fabric one on top of the other, in that in order to have the same performance of strength and resistance to impact in the directions 0° and 90°, two layers are needed, rotated at 90° between themselves.

According to a further feature of the invention, the thus obtained fabrics are subjected to a subsequent manual soaking during the course of the process of laying out the layers of composite fabric in the mold, the so-called "fitting". This production process reduces the technological difficulties of producing the fabric: it eliminates the phase of soaking and thus reduces significantly the risk of ruining the Dyneema® fiber by overheating and potential subsequent discarding or waste, at the expense of less stability in the fabric during fitting operations and of a greater risk of defects in accumulation or insufficiency of resin in the finished product.

Finally, fabrics with varying esthetic appearance and different fitting characteristics or strength may be achieved by varying the type of weaving (canvas, twill, satin).

### EXAMPLE

### Production of a steering wheel for racecars

The production method chosen as an example regards the creation of a steering wheel for racecars. To this end, a composite fabric was used on the basis of the invention in which the carbon fibers alternate to the Dyneema® fibers were woven in the warp and the sole Dyneema® fibers were woven in the weft, to obtain a final fabric of about 240 grams/square meter, with 50% between weight of carbon and Dyneema®. This fabric was subsequently soaked in a solvent with an epoxy resin system for treatment at low temperatures that allows for processing in an autoclave at temperatures that do not exceed 100°C.

The pre-soaked fabric created in this way was them laminated in a mold with the appropriate non-aligned orientation to guarantee adequate isotropy in the performance, and was then exposed to treatment in an autoclave at a temperature of 100°C with the appropriate cycle of treatment and temperature to obtain adequate esthetic appearance without compromising the resistance of the fibers.

The steering wheel that was obtained displayed excellent resistance to impact, with an excellent weight to resistance to collision ratio.

Naturally, the present invention is not limited to the forms of execution described, but includes all those variations in execution that may be a part of a vaster range of the invention's concept, as shall be claimed here below.

The association of carbon fibers with the fibers of a linear polyethylene of ultra-high molar mass (UHPE), like for example the Dyneema fibers, is the ideal material for the production of non-structural elements for racing cars, like: stabilizers; aerodynamic profiles; steering wheels; bumpers, internal panels (door panels, internal tunnels and the like) and external panels (car roof, backside shutter, bodywork sides) instrument panels and any other element requesting good mechanical features and which does not be subjected to temperatures above 100°C during the use.

## Claims

1. A composite tissue for the manufacture in mold of low specific weight objects having a high resistance to impacts composed by a tissue of carbon filaments weaved with the filaments of a high-performance polyethylene fiber formed by a linear polyethylene with ultra-high molar mass (UHPE) and impregnated in a matrix of a low curing temperature epoxy resin during the laying of the tissue sheets in the mold, **characterized by** the fact that the said tissue comprises the use of carbon fiber alternate to the polyethylene (UHPE) fiber in one of the weaving directions (weft or warp) and the use of the sole polyethylene (UHPE) fiber in the direction at right angles.
